# EUROPEAN PATENT APPLICATION

(11) **EP 3 076 276 A1**
(43) Date of publication of application: **05.10.2016**
(21) Application number: 14865617.6
(22) Date of filing: 12.09.2014
(51) Int. Cl.: G06F 3/048

(54) **INFORMATION PROCESSING DEVICE, INFORMATION PROCESSING METHOD, AND PROGRAM**

(30) Priority: 28.11.2013 JP 2013245681
(71) Applicant: Sony Corporation, Tokyo 108-0075 (JP)
(72) Inventor: SAKAMOTO, Ichiro, Tokyo 108-0075 (JP); NISHIBE, Mitsuru, Tokyo 108-0075 (JP); ICHIKAWA, Hirotake, Tokyo 108-0075 (JP); ISHIHARA, Atsushi, Tokyo 108-0075 (JP)
(74) Representative: D Young & Co LLP
(86) International application number: PCT/JP2014/074254
(87) International publication number: WO 2015/079778

(57) **Abstract**

To be able to realize a freer user experience by using respective windows operated by a plurality of users. Provided is an information processing apparatus including: an operation information acquiring unit configured to acquire operation information indicating an operation of a first user to a first window and an operation of a second user to a second window; a window managing unit configured to merge the first window and the second window in response to the operation information; and an information generation unit configured to generate information to be displayed on the merged window.

## Description

### Technical Field

The present disclosure relates to an information processing apparatus, an information processing method, and a program.

### Background Art

In recent years, a display device that a plurality of users simultaneously operate by using a large-size touch panel is becoming more prevalent. There, a plurality of windows are displayed on a screen, and a plurality of users input operations into the windows. As technologies relevant to this display device, Patent Literature 1 and Patent Literature 2 propose a technology for handling a plurality of inputs without identifying a plurality of users, and a technology that identifies a plurality of users and inputs by dividing each individual window into regions, for example.

### Citation List

### Patent Literature

- Patent Literature 1:: JP 2011-54069A
- Patent Literature 2:: JP 2013-149016A

### Summary of Invention

### Technical Problem

However, the technologies described in Patent Literature 1 and Patent Literature 2 have not realized how to identify a plurality of users and associate the users with one integrated window or region and share information with each other there, for example.

Thus, the present disclosure proposes a new and improved information processing apparatus, an information processing method, and a program, which are capable of realizing a freer user experience, by using respective windows operated by a plurality of users.

### Solution to Problem

According to the present disclosure, there is provided an information processing apparatus including: an operation information acquiring unit configured to acquire operation information indicating an operation of a first user to a first window and an operation of a second user to a second window; a window managing unit configured to merge the first window and the second window in response to the operation information; and an information generation unit configured to generate information to be displayed on the merged window.

According to the present disclosure, there is provided an information processing apparatus including: an information acquiring unit configured to acquire operation information indicating an operation of a first user to a window displayed on a display unit and an operation of a second user to the window; a window managing unit configured to divide the window into a first window and a second window different from the first window in response to the operation information; and an information generation unit configured to generate information to be displayed on each of the first window and the second window.

According to the present disclosure, there is provided an information processing method including: acquiring operation information indicating an operation of a first user to a first window and an operation of a second user to a second window; merging, by a processor, the first window and the second window in response to the operation information; and generating information to be displayed on the merged window.

According to the present disclosure, there is provided an information processing method including: acquiring operation information indicating an operation of a first user to a window displayed on a display unit and an operation of a second user to the window; dividing, by a processor, the window into a first window and a second window different from the first window in response to the operation information; and generating information to be displayed on each of the first window and the second window.

According to the present disclosure, there is provided a program for causing a computer to implement: a function of acquiring operation information indicating an operation of a first user to a first window and an operation of a second user to a second window; a function of merging the first window and the second window in response to the operation information; and a function of generating information to be displayed on the merged window.

According to the present disclosure, there is provided a program for causing a computer to implement: a function of acquiring operation information indicating an operation of a first user to a window displayed on a display unit and an operation of a second user to the window; a function of dividing the window into a first window and a second window different from the first window in response to the operation information; and a function of generating information to be displayed on each of the first window and the second window.

### Advantageous Effects of Invention

As described above, according to the present disclosure, a freer user experience is realized by using respective windows operated by a plurality of users.

Note that the effects described above are not necessarily limited, and along with or instead of the effects, any effect that is desired to be introduced in the present specification or other effects that can be expected from the present specification may be exhibited.

### Brief Description of Drawings

[FIG. 1] FIG. 1 is a block diagram illustrating a schematic function and configuration of an information processing apparatus according to an embodiment of the present disclosure.
[FIG. 2] FIG. 2 is a diagram illustrating an example of data of a window DB according to an embodiment of the present disclosure.
[FIG. 3] FIG. 3 is a flowchart illustrating a process of window mergence in an embodiment of the present disclosure.
[FIG. 4] FIG. 4 is a flowchart illustrating a process of window division in an embodiment of the present disclosure.
[FIG. 5] FIG. 5 is a diagram illustrating an exemplary display at the time of mergence of windows in an embodiment of the present disclosure.
[FIG. 6] FIG. 6 is a diagram illustrating an exemplary display at the time of division of a window in an embodiment of the present disclosure.
[FIG. 7] FIG. 7 is a diagram for describing an example of item display that utilizes mergence of windows in an embodiment of the present disclosure.
[FIG. 8] FIG. 8 is a diagram for describing another example of item display that utilizes mergence of windows in an embodiment of the present disclosure.
[FIG. 9] FIG. 9 is a diagram for describing an example of division and mergence of windows by three or more persons in an embodiment of the present disclosure.
[FIG. 10] FIG. 10 is a diagram for describing an example of mergence of an item associated with an account in an embodiment of the present disclosure.
[FIG. 11] FIG. 11 is a diagram for describing an example of division of content associated with an account in an embodiment of the present disclosure.
[FIG. 12] FIG. 12 is a diagram for describing an example of a process relevant to a merged window in an embodiment of the present disclosure.
[FIG. 13] FIG. 13 is a block diagram illustrating an exemplary hardware configuration of an information processing apparatus according to an embodiment of the present disclosure.

### Description of Embodiments

Hereinafter, (a) preferred embodiment(s) of the present disclosure will be described in detail with reference to the appended drawings. In this specification and the drawings, elements that have substantially the same function and structure are denoted with the same reference signs, and repeated explanation is omitted.

Note that description will be made in the following order.
1. Function and Configuration
2. Data of Window DB
3. Process Flow of Window Mergence
4. Process Flow of Window Division
5. Exemplary Display of Mergence and Division
6. Application Example
   6-1. Example of Item Display
   6-2. Example of Division and Mergence By Three or More Persons 6-3. Mergence of Item Associated with Account
   6-4. Division of Content Associated with Account
   6-5. Process Relevant to Merged Window
7. Hardware Configuration
8. Supplement

### (1. Function and Configuration)

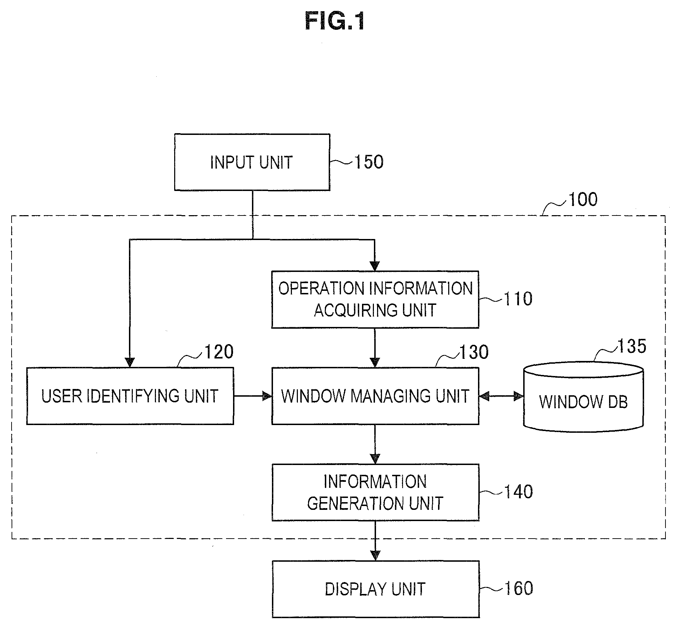

FIG. 1 is a block diagram illustrating a schematic function and configuration of an information processing apparatus according to an embodiment of the present disclosure. Referring to FIG. 1, the information processing apparatus 100 includes an operation information acquiring unit 110, a user identifying unit 120, a window managing unit 130, and an information generation unit 140. Also, the information processing apparatus 100 may further include one or both of an input unit 150 and a display unit 160.

The information processing apparatus 100 can be a circuit component built in a display device, for example. In this case, the information processing apparatus 100 itself does not include the input unit and the display unit, and acquires information input into the display device, and outputs information to be displayed in the display device. Alternatively, the information processing apparatus 100 may be a server that communicates with the display device via a network and controls display in the display device. In this case as well, the information processing apparatus 100 itself does not include the input unit and the display unit.

Also, the information processing apparatus 100 may be the display device, for example. In this case, the information processing apparatus 100 includes at least one of the input unit 150 and the display unit 160. The display device may be a display such as a liquid crystal display (LCD) or an organic electro-luminescence (EL) display, and may be a projector, for example. Also, the display device may achieve display of a larger display area, by a plurality of display devices combined in a cooperative manner.

Note that an exemplary configuration of a hardware that can configure the information processing apparatus 100 will be described later.

The operation information acquiring unit 110 is configured with a processor, for example. The operation information acquiring unit 110 acquires, from the input unit 150, information indicating an operation of a first user to a first window displayed on the display unit 160 and an operation of a second user different from the first user into a second window different from the first window displayed on the display unit 160. Here, the input unit 150 includes a touch sensor (that is combined with the display unit 160 to configure a touch panel) provided in the display unit 160, for example. In this case, the information indicating the operation of each user can be an operation signal output from the touch sensor. Also, the input unit 150 includes a camera, for example. In this case, the information indicating the operation of each user is a captured image of the camera, and a gesture operation of the user can be extracted by analyzing the captured image.

The user identifying unit 120 is configured with a processor, for example. The user identifying unit 120 identifies each of the first user and the second user. The user identifying unit 120 acquires information for identifying the first user and the second user, from the input unit 150. Here, the input unit 150 includes a camera, for example. In this case, the information for identifying the user is a captured image of the camera, and the user identifying unit 120 identifies the first user and the second user, by applying recognition technology such as face recognition to the captured image.

The window managing unit 130 is configured with a processor, for example. The window managing unit 130 merges the first window and the second window in response to the operation of the first user and the operation of the second user, for example. Also, for example, the window managing unit may divide the merged window into respective windows corresponding to the first user and the second user in response to the operation of the first user and the operation of the second user. The window managing unit 130 manages display of the window, in addition to the mergence or the division of the window. In this case, the window managing unit 130 may refer to a window DB 135. Note that an example of data included in the window DB 135 will be described later.

The information generation unit 140 is configured with a processor, for example. The information generation unit 140 generates information to be displayed on the window which is merged or divided by the window managing unit 130. The generated information can be supplied to the display unit 160. For example, when a web browser is used as the window, the information generation unit 140 generates a new HTML to display it on the merged or divided browser, by combining a context (a type of a photograph or a moving image to be displayed, etc.) for creating HTML that makes up display content of the web browser and information of a plurality of users. Note that a more specific example of the generated information will be described later.

As described above, the input unit 150 may be configured in a device different from the information processing apparatus 100, and may be included in the information processing apparatus 100. The input unit 150 may include an input device such as a touch sensor, and may include a camera, for example. When the input unit 150 includes the input device, the operation signal generated in response to the operation of the user is supplied to the operation information acquiring unit 110, for example. Also, when the input unit 150 includes the camera, the captured image of the user who performs an operation to the window displayed on the display unit 160 is supplied to the user identifying unit 120 as the information for identifying the user, for example. Also, the captured image of the user may be supplied to the operation information acquiring unit 110, as information including a gesture operation of the user.

As described above, the display unit 160, may also be configured in a device different from the information processing apparatus 100, and may be included in the information processing apparatus 100. The display unit 160 may be a display such as an LCD or an organic EL display, and may be a projector, for example. Also, the display unit 160 may be configured with a plurality of display devices combined in a cooperative manner. The display unit 160 displays an image including one or a plurality of windows. The location of the window is decided by the window managing unit 130 and the information displayed on the window is generated by the information generation unit 140.

### (2. Data of Window DB)

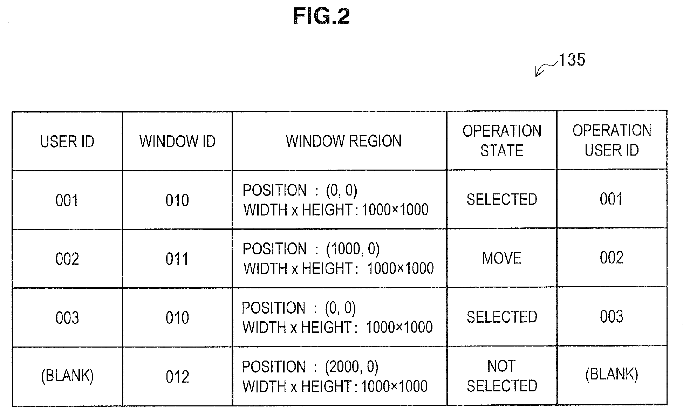

FIG. 2 is a diagram illustrating an example of data of the window DB according to an embodiment of the present disclosure. Referring to FIG. 2, the window DB 135 includes fields of a user ID, a window ID, a window region, an operation state, and an operation user ID.

The respective windows displayed on the display unit 160 are associated with window IDs included in the window DB 135. In the depicted example, "010", "011", and "012" are included as three window IDs in the window DB 135. In this case, at least three windows are displayed in the display unit 160.

Here, two records are included in the window DB 135, with respect to the window ID "010". This means that the window of window ID "010" is a window created by merging two windows. In the depicted example, a merged window (window ID "010") of the first window operated by the first user (user ID "001") and the second window operated by the second user (user ID "003") is generated.

Also, as illustrated in the drawing, in the present embodiment, a user ID and an operation user ID are associated with a window. The user ID indicates an owner of a window. On the other hand, the operation user ID indicates an operator of a current window. The owner may be identified as the user who performs an operation for opening (generating at the beginning) the window, for example. In thig user identification, a result of identification of the user by face recognition or the like by the user identifying unit 120 can be utilized. Also, the operator can be identified as the user who performs an operation to the window at the present moment. Here, the result of the user identification by the user identifying unit 120 is utilized.

In the present embodiment, an operation such as mergence and division of the window can be performed under a condition that the operation user is the owner as described later for example, by associating the user ID of the owner with the window together with the operation user ID. In another embodiment, for example, the operation user ID is associated with the window while the user ID of the owner is not associated, and mergence and division or the like of the window may be enabled by the operation of the user, regardless of the owner of the window (the owner is needless to be recorded in the first place).

In the window DB 135, the window region and the operation state are also associated with the window. The window region is the information that specifies the location of the window in the display unit 160. In the depicted example, positions (coordinates in screen image) of end points (for example, bottom left corner) of the windows, and widths and heights of the windows are specified. In the merged window (the window ID "010"), the window region is same.

Also, the operation state indicates the operation state of the window according to the information acquired by the operation information acquiring unit 110. "Selected" indicates a state in which the window is selected by the user but does not move (for example, browsed), and "move" indicates a state in which the window is selected by the user and moves (including being transformed). For example, "move" corresponds to a case in which the window moves while being touched or operated with gesture by the user. "Not selected" indicates a state in which the window is not selected by the user. When the operation state is "not selected", there is no user who operates the window at the time point, and thus the operation user ID is blank.

Note that, in the depicted example, the user ID indicating the owner is also blank for the window of the window ID "012". This state occurs when this window is automatically generated by the system, and thus the owner is not defined (the user who selects the window first can be the owner), and when a predetermined time has passed while the operation state of the window is "not selected", and consequently the information of the owner is cleared, for example.

In the following, a process flow of mergence and division of the window in the present embodiment, utilizing the information of the window DB 135 described above, will be described more specifically.

### (3. Process Flow of Window Mergence)

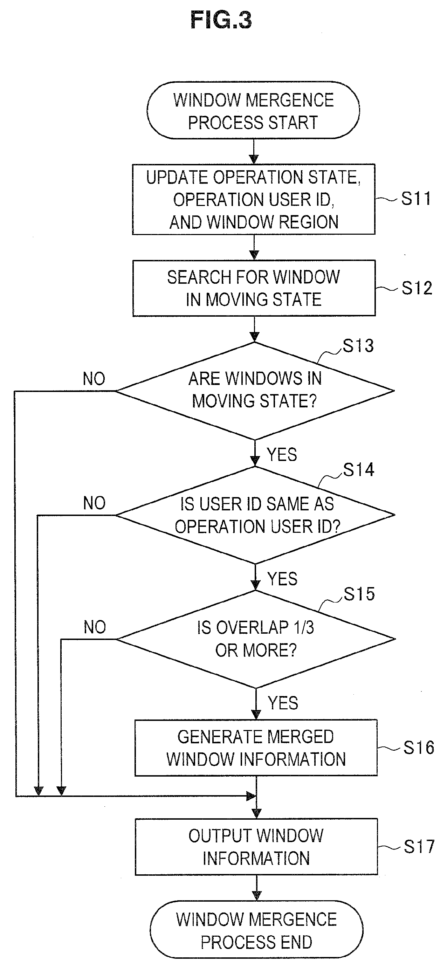

FIG. 3 is a flowchart illustrating the process of the window mergence in an embodiment of the present disclosure. The depicted process is executed by the window managing unit 130 of the information processing apparatus 100. First, the window managing unit 130 updates the operation state, the operation user ID, and the window region, with respect to the respective windows displayed on the display unit 160, on the basis of the information acquired by the operation information acquiring unit 110 and the user identifying unit 120 (step S11).

Thereafter, the window managing unit 130 searches for a window in a moving state, in the managed windows, that is, the windows associated with the records of the window DB 135 (step S12). As described above, in the moving state, the window is selected by the operation of the user, and is moved or transformed.

Thereafter, the window managing unit 130 determines whether or not a plurality of windows are in the moving state (step S13). If a plurality of windows are not in the moving state, the mergence of the window does not occur, and thus the window managing unit 130 outputs the information of the window to the information generation unit 140 (step S17), and ends the process.

In the determination of step S 13, if a plurality of windows are in the moving state, the window managing unit 130 further determines whether or not there are a plurality of windows whose user IDs (indicating the owner) are the same as their operation user IDs, among a plurality of windows in the moving state (step S14). In the depicted example, the mergence of the window is executed under a condition that the user who operates each window of the mergence target is the owner of the window. Thus, if there are not a plurality of windows whose user IDs are the same as the operation user IDs, the window managing unit 130 outputs the information of the window to the information generation unit 140 (step S17), and ends the process.

Note that the user who is the owner or the operator of the window, and the condition of the mergence or the division of the window have various other variations. For example, if the operation user (the first user) of one window (the first window) is the owner of the first window, the window managing unit 130 may enable the mergence of the window via the subsequent determination process, regardless of whether or not the operation user (the second user) of another window (the second window) is the owner of the second window. In addition, the window managing unit 130 may enable the mergence of the window, only when the second user is also the owner of the second window. Alternatively, as described already, the mergence of the window may be executable, regardless of the owner of the window.

In the determination of step S 14, if the user ID and the operation user ID are same with respect to a plurality of windows, the window managing unit 130 further determines whether or not two or more windows of those windows overlap each other in a region of 1/3 or more of one of the windows at least (step S15). Note that 1/3 is an example of a predetermined proportion, and this value can be changed arbitrarily. Here, if there is no window that overlaps in the 1/3 or more region, the window managing unit 130 outputs the information of the window to the information generation unit 140 (step S17), and ends the process.

In the determination of step S15, if there are two or more windows that overlap in the 1/3 or more region, the window managing unit 130 generates the window information of the merged window (step S16). More specifically, the window managing unit 130 gives the window ID that is common in the merged window, in the window DB 135. The window ID given here may be a window ID of one of the windows before merged, and may be generated newly.

Also, the window managing unit 130 sets a region that encompasses both of the windows before merged at least, in the window region of the merged window. Further, after the mergence of the window is executed, the merged window is in a selected state (a state in which it is selected by the user but is not moved or transformed), and thus the window managing unit 130 changes the operation state of the merged window from "move" to "selected". Thereafter, the window managing unit 130 outputs the information of the window including the merged window to the information generation unit 140 (step S17), and ends the process.

Note that the condition for executing the mergence of the windows in response to the operation of the user has various other variations. For example, the window managing unit 130 may execute the mergence of the window, when the position relationship between the first window and the second window satisfies a predetermined condition by the operation of the first user and the operation of the second user. For example, this case includes a case in which the windows are merged when a region of a predetermined proportion (1/3 in the above example) or more of the first window overlaps the second window, as in the above example. Also, the window managing unit 130 may merge the windows, when a region of a predetermined proportion or more of the second window overlaps the first window. Alternatively, the window managing unit 130 may determine whether or not to merge the windows, on the basis of the distance between the centers of the windows for example, instead of the overlap region of the windows.

### (4. Process Flow of Window Division)

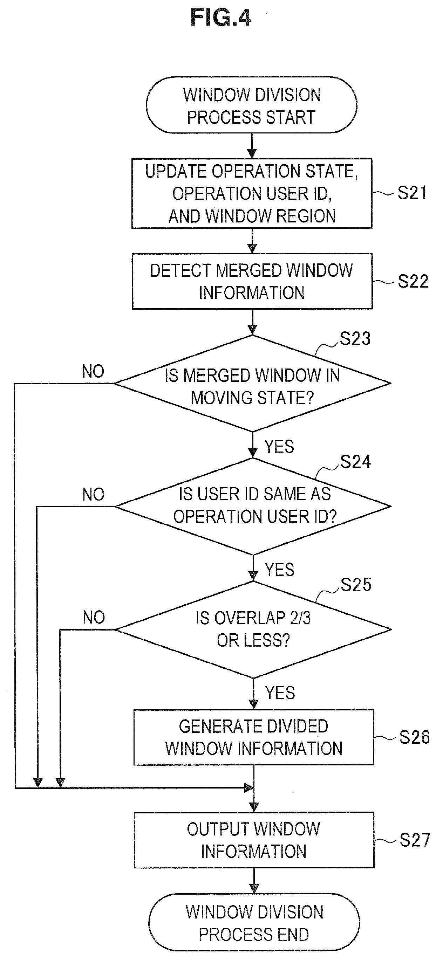

FIG. 4 is a flowchart illustrating a process of window division in an embodiment of the present disclosure. The depicted process is executed by the window managing unit 130 of the information processing apparatus 100. First, the window managing unit 130 updates the operation state, the operation user ID, and the window region, with respect to the respective windows displayed on the display unit 160, on the basis of the information acquired by the operation information acquiring unit 110 and the user identifying unit 120 (step S21).

Thereafter, the window managing unit 130 searches for a merged window, in the managed windows, that is, the windows associated with the records of the window DB 135 (step S22). For example, in the example of the window DB 135 illustrated in FIG. 2, the merged window can be identified by a common window ID given to a plurality of records.

Thereafter, the window managing unit 130 determines whether or not the merged window is in the moving state (step S23). When the merged window is in the moving state, the window is selected by the operation of the user and is moved or transformed. Here, if the merged window is not in the moving state, the division of the window does not occur, and thus the window managing unit 130 outputs the information of the window to the information generation unit 140 (step S27), and ends the process.

In the determination of step S23, if the merged window is in the moving state, the window managing unit 130 further determines whether or not the user ID (indicating the owner) and the operation user ID of the merged window are same (step S24). In the depicted example, the division of the window is executed under a condition that a plurality of users that operate the merged window are each owners of the merged window. Note that, for example, as in the example of the window DB 135 illustrated in FIG. 2, a plurality of user IDs and operation user IDs can be associated with the merged window, according to the number of windows before merged. If the user ID and the operation user ID of the merged window are not same, the window managing unit 130 outputs the information of the window to the information generation unit 140 (step S27), and ends the process.

In the determination of step S24, if the user ID and the operation user ID of the merged window are same, the window managing unit 130 further determines whether or not the overlap region of imaginary windows set in the merged window is equal to or smaller than 2/3 of the respective windows (step S25). Note that 2/3 is an example of a predetermined proportion, and this value can be changed arbitrarily. The imaginary windows set in the merged window will be described later. Here, if the overlap region of the imaginary windows exceeds 2/3, the window managing unit 130 outputs the information of the windows to the information generation unit 140 (step S27), and ends the process.

In the determination of step S25, if the overlap region of the imaginary windows is equal to or smaller than 2/3 of the respective windows, the window managing unit 130 generates the window information of the divided windows (step S26). More specifically, the window managing unit 130 gives different window IDs to a plurality of records associated with the window ID of the merged window, in the window DB 135. The window ID of the merged window may be given, as it is, to one of the divided windows, and a new window ID may be generated for all of the divided windows.

Also, the window managing unit 130 sets the window regions of the divided windows, in the window region of the window before divided. Further, after the division of the window is executed, the divided windows are in the selected state (a state in which it is selected by the user but is not moved or transformed), and thus the window managing unit 130 changes the operation state of the divided windows from "move" to "selected". Thereafter, the window managing unit 130 outputs the information of the window including the divided windows to the information generation unit 140 (step S27), and ends the process.

Note that the condition for executing the division of the window in response to the operation of the user has various other variations. For example, the window managing unit 130 may set the imaginary windows corresponding to respective users, in the merged window, and execute the division of the window when the position relationship between the imaginary windows satisfies a predetermined condition by the operation of the user. For example, this case includes a case in which the window is divided when the overlap region of imaginary windows becomes equal to or smaller than a predetermined proportion (2/3 in the above example) of the respective windows, as in the above example. Also, the window managing unit 130 may determine whether or not to divide the window, on the basis of the distance between the centers of the imaginary windows for example, instead of the overlap region of the imaginary windows.

Also, the window managing unit 130 may determine whether or not to divide the window on the basis of the operations of a plurality of users to the merged window, without setting the imaginary windows. For example, the window managing unit 130 may divide the window, when the acquired drag operations by a plurality of users to the merged window in directions different from each other are a predetermined operation amount or more. Also, the window managing unit 130 may divide the window, when one user fixes the merged window while another user performs a drag operation to the window, and an acquired relative operation amount is a predetermined value or more.

Note that the window managing unit 130 may be configured to execute only one of the mergence process and the division process of the window which are described above, and may be configured to execute both in parallel.

### (5. Exemplary Display of Mergence and Division)

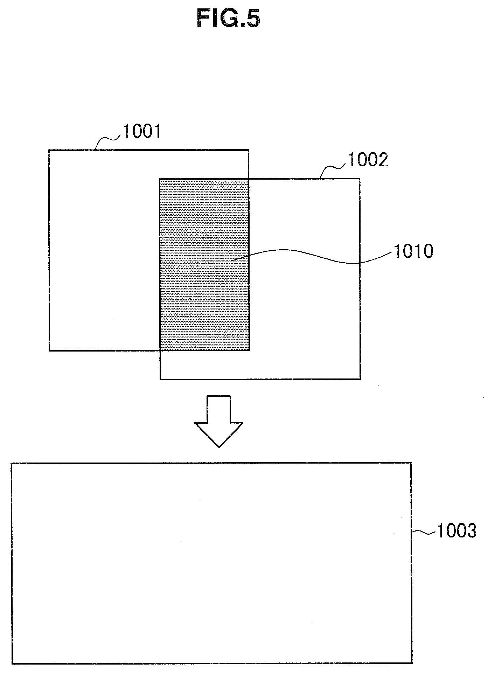

FIG. 5 is a diagram illustrating an exemplary display at the time of mergence of the windows in an embodiment of the present disclosure. Referring to FIG. 5, a first window 1001 and a second window 1002 are displayed on the display unit 160. The first window 1001 is selected and moved by the operation of the first user, and the second window 1002 is selected and moved by the operation of the second user.

For example, in the example described with reference to FIG. 3 in the above, when an overlap region 1010 between the first window 1001 and the second window and 1002 has become equal to or larger than 1/3 of the area of at least one of the first window 1001 or the second window 1002, the window managing unit 130 merges the first window 1001 and the second window 1002, and the merged window 1003 is displayed on the display unit 160.

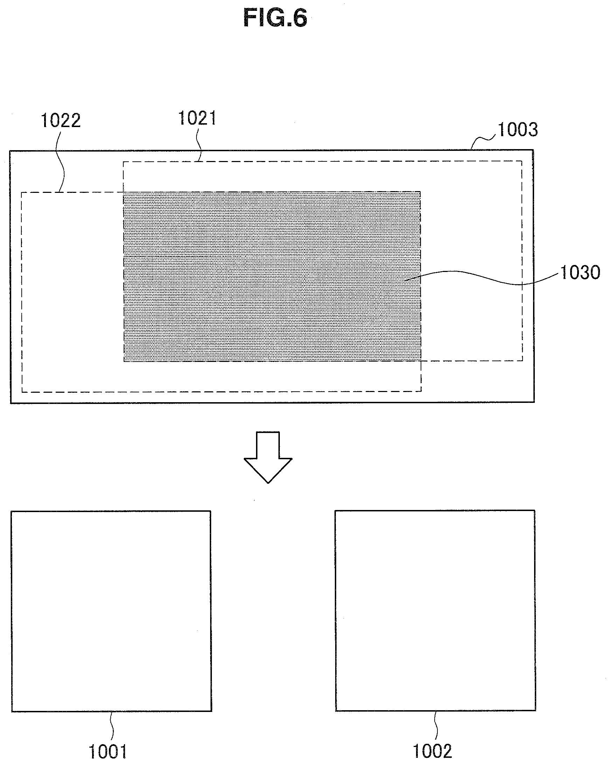

FIG. 6 is a diagram illustrating an exemplary display at the time of division of the window in an embodiment of the present disclosure. Referring to FIG. 6, the merged window 1003 is displayed in the display unit 160. Here, when the operation of the movement of the merged window 1003 is started by each of the first user and the second user, the imaginary windows 1021, 1022 are set in the merged window 1003. Note that the imaginary windows 1021, 1022 are regions that are set imaginarily, and are not visually confirmed by the users.

After this, the imaginary window 1021 is moved by the operation of the first user, and the imaginary window 1022 by the operation of the second user, respectively. The region of the window 1003 merged to encompass these windows may be extended by the movement of the imaginary windows 1021, 1022. An overlap region 1030 of the imaginary windows 1021, 1022 is reduced little by little by the movement.

For example, in the example described with reference to FIG. 4 in the above, the window managing unit 130 divides the merged window 1003 into the first window 1001 and the second window 1002, when the overlap region 1030 of the imaginary windows 1021, 1022 has become equal to or smaller than 2/3 of the area of each window. The window region of the divided first window 1001 and second window 1002 can be set in the window before divided, that is, the window region of the merged window 1003.

### (6. Application Example)

### (6-1. Example of Item Display)

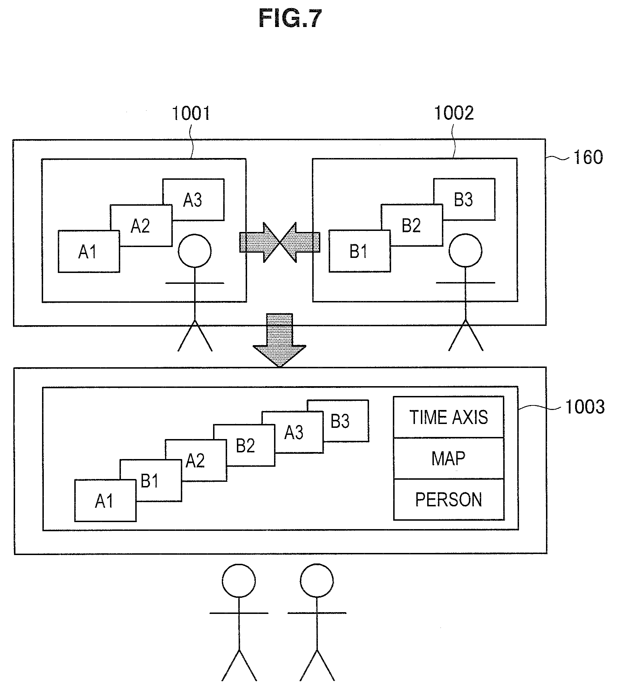

FIG. 7 is a diagram for describing an example of an item display that utilizes mergence of windows in an embodiment of the present disclosure. Referring to FIG. 7, the first window 1001 and the second window 1002 are displayed on the display unit 160. The first window 1001 is selected and moved by the operation of the first user, and the second window 1002 is selected and moved by the operation of the second user.

Here, each of the first window 1001 and the second window 1002 includes an item group as display content. A first item group including items A1, A2, A3 is displayed in the first window 1001, and a second item group including items B1, B2, B3 is displayed in the second window 1002.

In the depicted example, when the first window 1001 and the second window 1002 are merged by the operation such as an example described with reference to FIG. 3 and FIG. 5 in the above for example, a third item group created by merging the first item group and the second item group is displayed in the merged window 1003. The third item group includes the items included in the first item group or the second item group, that is, the items A1, B1, A2, B2, A3, B3. The third item group may be arranged in an integrated manner, on the basis of arbitrary axes such as time axis, map, and person, for example.

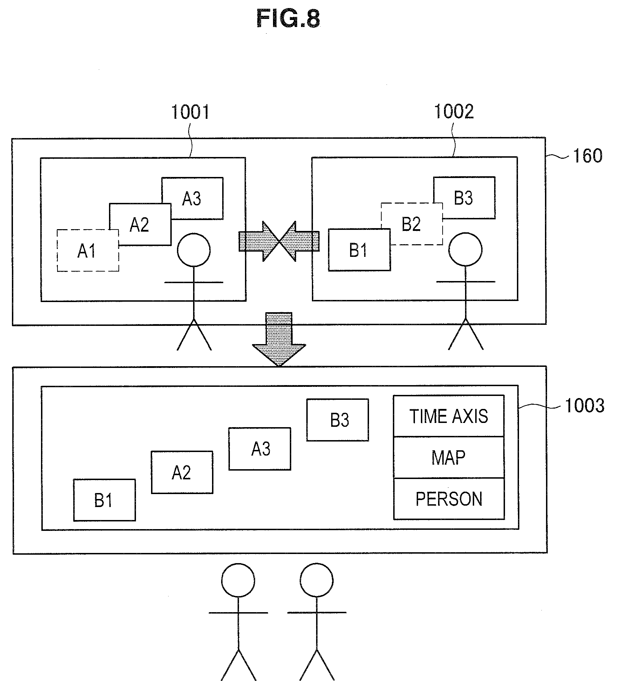

FIG. 8 is a diagram for describing another example of item display that utilizes mergence of windows in an embodiment of the present disclosure. Referring to FIG. 8, the first window 1001 and the second window 1002 are displayed on the display unit 160. The first window 1001 is selected and moved by the operation of the first user, and the second window 1002 is selected and moved by the operation of the second user.

Here, the first window 1001 and the second window 1002 include the first item group and the second item group respectively, in the same way as the example illustrated in FIG. 7. Note that, in the example of FIG. 8, the second user does not have access authority with respect to the item A1 of the first item group. In the same way, the first user does not have access authority with respect to the item B2 of the second item group.

In this case, the information generation unit 140 excludes the item A1 and the item B2 from the third item group displayed on the merged window 1003 displayed by merging the first window 1001 and the second window 1002. Thus, in this example, the third item group displayed on the merged window 1003 includes the items B1, A2, A3, B3. In the same way as the example of FIG. 7, the third item group may be arranged in an integrated manner, on the basis of arbitrary axes such as time axis, map, person, for example.

Note that, in the above example, the information of the items A1, B2 excluded from the third item group is internally retained in the information processing apparatus 100 for example, and may be displayed again in the first window 1001 and the second window 1002, when the window 1003 merged thereafter is again divided into the first window 1001 and the second window 1002.

In this way, the users can share the items more freely by utilizing the mergence of the windows, and the privacy of the users is protected as necessary. Note that the items are, for example, a content file such as photograph and moving image (an icon can be displayed), a bookmark, an address book, and the like.

### (6-2. Example of Division and Mergence By Three or More Persons)

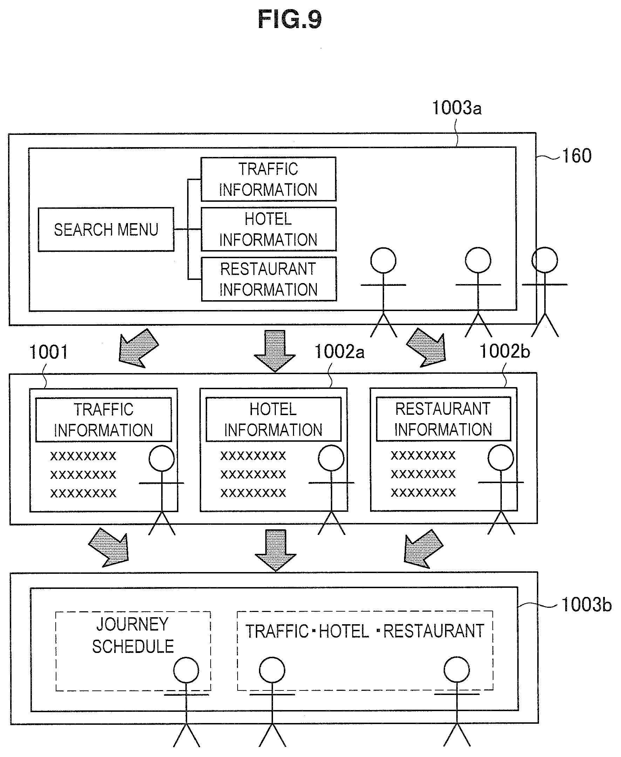

FIG. 9 is a diagram for describing an example of division and mergence of the window by three or more persons in an embodiment of the present disclosure. Referring to FIG. 9, a merged window 1003a is displayed on the display unit 160. As described above, the merged window 1003a may be displayed from the beginning, without executing the mergence by the operation of the user. In the depicted example, a browser screen image is displayed on the merged window 1003a, and three users make a plan of their journey.

Here, for example, the three users search information individually, with respect to traffic information, hotel information, and restaurant information. The merged window 1003a is divided into a first window 1001 and second windows 1002a, 1002b, by each user performing a predetermined operation to the merged window 1003a. As described above, the second window 1002 can include a plurality of windows, in the present embodiment. In this case, there can be a plurality of second users corresponding to the second window 1002. For example, when the second window 1002 is two, the window is divided into three.

Note that, although not depicted, just after the division, the same content, for example a copy of content of the merged window 1003a before divided can be displayed in each of the first window 1001 and the second windows 1002a, 1002b. Thereafter, each user can search information individually by using the divided windows, by separating the work into traffic information, hotel information, and restaurant information, for example.

Further, when the individual information search ends, each user performs a predetermined operation to the first window 1001 and the second windows 1002a, 1002b, and thereby a window 1003b created by merging these windows is displayed. In the merged window 1003b, the content of the first window 1001 and the second windows 1002a, 1002b before merged is displayed in a merged state. For example, the user may further input information of a journey schedule, in addition to the information of traffic, hotel, and restaurant displayed on the merged window 1003b.

In this way, the user can search information more freely and bring the searched information together by utilizing the division and the mergence of the window. Also, in the present embodiment, the division and the mergence of the window are not limited to between two windows, but can be performed between three or more windows as in the above example.

### (6-3. Mergence of Item Associated with Account)

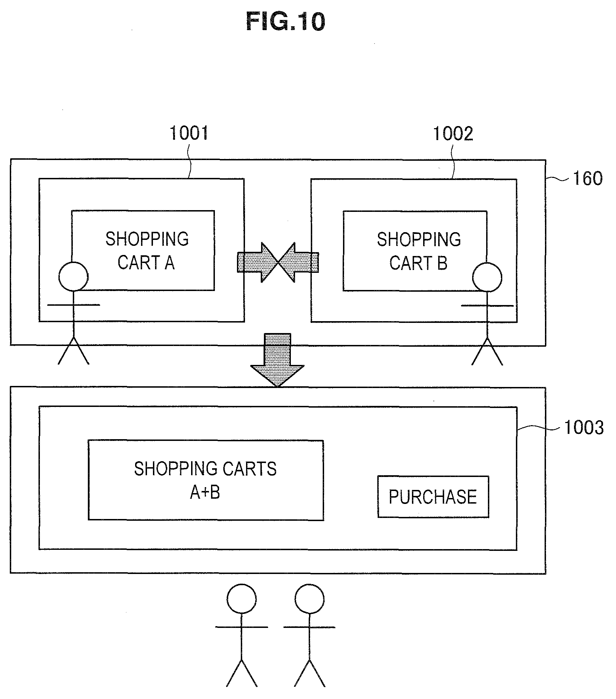

FIG. 10 is a diagram for describing an example of mergence of items associated with accounts in an embodiment of the present disclosure. Referring to FIG. 10, the first window 1001 and the second window 1002 are displayed on the display unit 160. The first window 1001 is selected and moved by the operation of the first user, and the second window 1002 is selected and moved by the operation of the second user.

Here, each of the first window 1001 and the second window 1002 includes an item group as display content. A first item group (a shopping cart A) including an item that the first user purchases in an online store is displayed in the first window 1001, and a second item group (a shopping cart B) including an item that the second user purchases in the online store is displayed in the second window 1002. Here, the first item group is associated with the user account of the first user, and the second item group is associated with the user account of the second user.

In the depicted example, if the first window 1001 and the second window 1002 are merged by an operation such as an example described with reference to FIG. 3 and FIG. 5 in the above for example, a third item group (shopping carts A+B) created by merging the first item group and the second item group is displayed in the merged window 1003. This third item group is associated with a user account shared by the first user and the second user. For example, the first user and the second user can jointly purchase the items included in the third item group (the shopping carts A+B), by selecting a purchase button displayed on the merged window 1003.

In this way, the users can freely perform joint purchase or the like of the items, by associating the items associated with the user accounts of respective users with the account shared by the users, simultaneously with the division and the mergence of the window.

### (6-4. Division of Content Associated with Account)

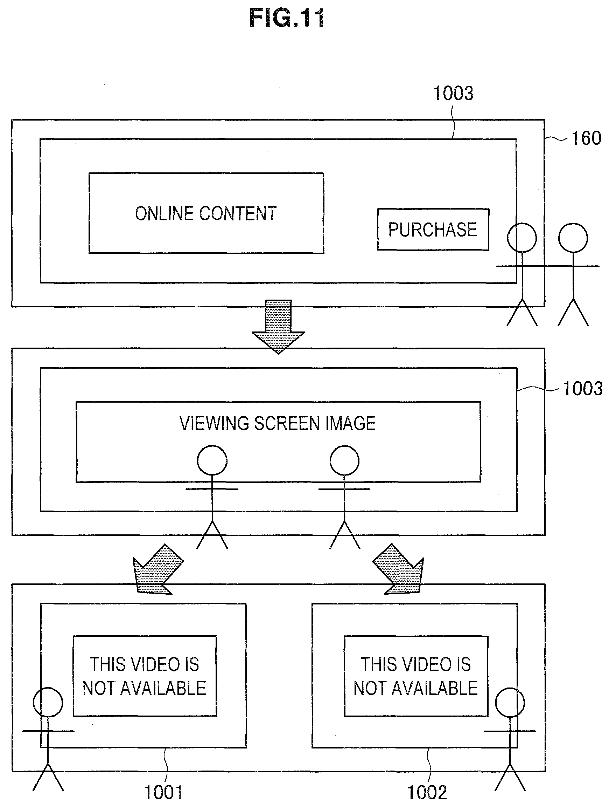

FIG. 11 is a diagram for describing an example of division of content associated with an account in an embodiment of the present disclosure. Referring to FIG. 11, the merged window 1003 is displayed in the display unit 160. The first user and the second user jointly purchase online content, by using a user account shared by them. Then, the first user and the second user starts viewing the jointly purchased online content, in the merged window 1003.

However, here, the first user and the second user tries to view the online content on respective different windows, for some reason. In this case, the first user and the second user divides the merged window by an operation such as the example described with reference to FIG. 4 and FIG. 6 in the above, for example. If the online content is associated with the user account shared by the first user and the second user and is also associated with their individual user accounts, the first window 1001 and the second window 1002 after the division include copies of the online content.

However, in the depicted example, the online content is associated with the user account shared by the first user and the second user, but is not associated with their individual user accounts. Thus, the information generation unit 140 of the information processing apparatus 100 does not display the copy of the content displayed on the merged window 1003, in the first window 1001 and the second window 1002 which are the divided windows. In these windows, an error message such as "this video is not available" is displayed, for example. Alternatively, when a content list is displayed on the first window 1001 and the second window 1002 which are the divided windows, the title or the like of the content displayed on the window 1003 is displayed but grayed out, in order to disable selection.

In this way, with respect to the copy of the content by division of the window, the association between the content and the user account, more specifically a control according to presence or absence of access authority for example, is optional.

### (6-5. Process Relevant to Merged Window)

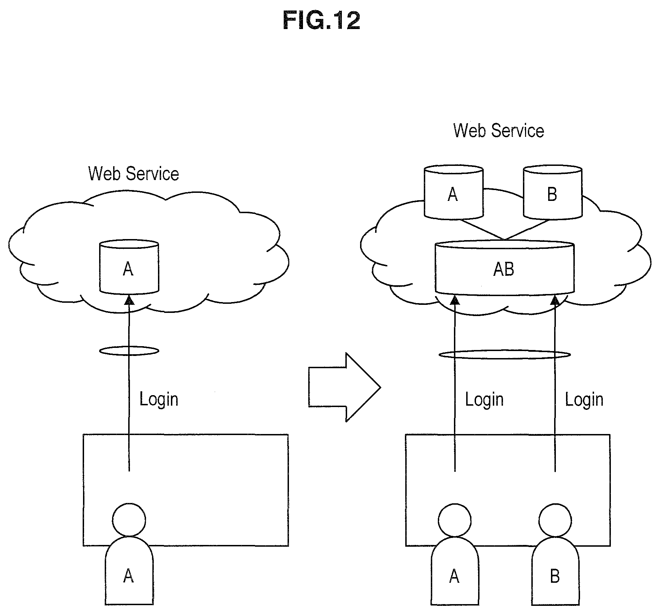

FIG. 12 is a diagram for describing an example of a process relevant to the merged window in an embodiment of the present disclosure. Referring to FIG. 12, when the user A logs in a web service via a displayed window, user B also logs in together with the user A by mergence of the windows.

In this case, a new user account (account AB), which partially takes over the information of the user account of each of the user A and the user B, is generated on the web service. For example, the information recorded in association with this new user account may be changeable, only when all of the users who shares the account log in. In this case, the information is unable to be changed by login of an individual user, and thus a common rule approved by all users that share the account can be recorded safely, for example. Note that the recorded information can be browsed, when an individual user logs in.

Also, as another configuration, an advertisement fitted to a situation can be output, by outputting information of recommendation that is common among a plurality of users who are owners or operators of the window, with respect to the merged window, for example. Also, a right of purchase of article and the service may be given, under a condition of accessing via the merged window. In this case, it is necessary that a predetermined number of users are collected to access from the window created by merging the windows of respective users, and thus a customer attracting effect is expected. In addition to the number of users, a state and an attribute of users may be restricted to increase its rarity value.

### (7. Hardware Configuration)

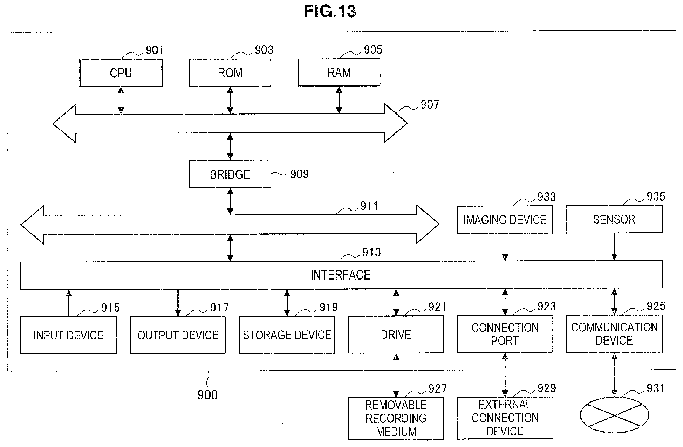

Next, with reference to FIG. 13, a hardware configuration of an information processing apparatus according to an embodiment of the present disclosure will be described. FIG. 13 is a block diagram showing an example of a hardware configuration of an information processing apparatus according to an embodiment of the present disclosure.

The information processing apparatus 900 includes a central processing unit (CPU) 901, read only memory (ROM) 903, and random access memory (RAM) 905. Further, the information processing apparatus 900 may also include a host bus 907, a bridge 909, an external bus 911, an interface 913, an input device 915, an output device 917, a storage device 919, a drive 921, a connection port 923, and a communication device 925. Furthermore, the information processing apparatus 900 may include an imaging device 933 and a sensor 935 as necessary. The information processing apparatus 900 may also include, instead of or along with the CPU 901, a processing circuit such as a digital signal processor (DSP) or an application specific integrated circuit (ASIC).

The CPU 901 functions as an arithmetic processing unit and a control unit and controls an entire operation or a part of the operation of the information processing apparatus 900 according to various programs recorded in the ROM 903, the RAM 905, the storage device 919, or a removable recording medium 927. The ROM 903 stores programs and arithmetic parameters used by the CPU 901. The RAM 905 primarily stores programs used in execution of the CPU 901 and parameters and the like varying as appropriate during the execution. The CPU 901, the ROM 903, and the RAM 905 are connected to each other via the host bus 907 configured from an internal bus such as a CPU bus or the like. In addition, the host bus 907 is connected to the external bus 911 such as a peripheral component interconnect/interface (PCI) bus via the bridge 909.

The input device 915 is a device operated by a user, such as a mouse, a keyboard, a touch panel, buttons, a switch, and a lever. Also, the input device 915 may be a remote control device using, for example, infrared light or other radio waves, or may be an external connection device 929 such as a cell phone compatible with the operation of the information processing apparatus 900. The input device 915 includes an input control circuit that generates an input signal on the basis of information input by the user and outputs the input signal to the CPU 901. The user inputs various kinds of data to the information processing apparatus 900 and instructs the information processing apparatus 900 to perform a processing operation by operating the input device 915.

The output device 917 is configured from a device capable of visually or aurally notifying the user of acquired information. For example, the output device 917 may be: a display device such as a liquid crystal display (LCD), a plasma display panel (PDP), or an organic electro-luminescence (EL) display; an audio output device such as a speaker or headphones; or a printer. The output device 917 outputs results obtained by the processing performed by the information processing apparatus 900 as video in the form of text or an image or as audio in the form of audio or sound.

The storage device 919 is a device for storing data configured as an example of a storage unit of the information processing apparatus 900. The storage device 919 is configured from, for example, a magnetic storage device such as a hard disk drive (HDD), a semiconductor storage device, an optical storage device, or a magneto-optical storage device. This storage device 919 stores programs to be executed by the CPU 901, various data, and various data obtained from the outside.

The drive 921 is a reader/writer for the removable recording medium 927 such as a magnetic disk, an optical disc, a magneto-optical disk, or a semiconductor memory, and is built in or externally attached to the information processing apparatus 900. The drive 921 reads out information recorded on the attached removable recording medium 927, and outputs the information to the RAM 905. Further, the drive 921 writes the record on the attached removable recording medium 927.

The connection port 923 is a port for allowing devices to directly connect to the information processing apparatus 900. Examples of the connection port 923 include a universal serial bus (USB) port, an IEEE1394 port, and a small computer system interface (SCSI) port. Other examples of the connection port 923 may include an RS-232C port, an optical audio terminal, and a high-definition multimedia interface (HDMI) (registered trademark) port. The connection of the external connection device 929 to the connection port 923 may enable the various data exchange between the information processing apparatus 900 and the external connection device 929.

The communication device 925 is a communication interface configured from, for example, a communication device for establishing a connection to a communication network 931. The communication device 925 is, for example, a wired or wireless local area network (LAN), Bluetooth (registered trademark), a communication card for wireless USB (WUSB), or the like. Alternatively, the communication device 925 may be a router for optical communication, a router for asymmetric digital subscriber line (ADSL), a modem for various communications, or the like. The communication device 925 can transmit and receive signals and the like using a certain protocol such as TCP/IP on the Internet and with other communication devices, for example. The communication network 931 connected to the communication device 925 is configured from a network which is connected via wire or wirelessly and is, for example, the Internet, a home-use LAN, infrared communication, radio wave communication, and satellite communication.

The imaging device 933 is a device which images a real space by use of various members including an image sensor such as a charge coupled device (CCD) or a complementary metal oxide semiconductor (CMOS) and a lens for controlling image formation of a subject on the image sensor, and generates a pickup image. The imaging device 933 may image a still image or a moving image.

The sensor 935 is any of various sensors such as an acceleration sensor, a gyro sensor, a magnetic field sensor, an optical sensor, and a sound sensor. For example, the sensor 935 acquires information related to the state of the information processing apparatus 900 itself, such as the posture of the housing of the information processing apparatus 900, or information related to the peripheral environment of the information processing apparatus 900, such as the brightness or noise around the information processing apparatus 900. Further, the sensor 935 may include a global positioning system (GPS) sensor which measures the latitude, the longitude, and the altitude of the apparatus by receiving a GPS signal.

Heretofore, an example of the hardware configuration of the information processing apparatus 900 has been shown. Each of the structural elements described above may be configured using a general-purpose material, or may be configured from hardware dedicated to the function of each structural element. The configuration may be changed as appropriate according to the technical level at the time of carrying out embodiments.

### (8. Supplement)

The embodiments of the present disclosure may include the information processing apparatus, the system, the information processing method executed in the information processing apparatus or the system, the program for causing the information processing apparatus to function, and the non-transitory tangible media having the program recorded thereon, which have been described above, for example.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

In addition, the effects described in the present specification are merely illustrative and demonstrative, and not limitative. In other words, the technology according to the present disclosure can exhibit other effects that are evident to those skilled in the art along with or instead of the effects based on the present specification.

Additionally, the present technology may also be configured as below.
(1) An information processing apparatus including:
   an operation information acquiring unit configured to acquire information indicating an operation of a first user to a first window displayed on a display unit and an operation of a second user different from the first user to a second window different from the first window displayed on the display unit;
   a user identifying unit configured to identify each of the first user and the second user;
   a window managing unit configured to merge the first window and the second window in response to the operation of the first user and the operation of the second user; and
   an information generation unit configured to generate information to be displayed on the merged window.
(2) The information processing apparatus according to (1), wherein
   the window managing unit merges the first window and the second window in response to the operation of the first user and the operation of the second user, under a condition that the first user is an owner of the first window.
(3) The information processing apparatus according to (2), wherein
   the window managing unit further merges the first window and the second window in response to the operation of the first user and the operation of the second user, under a condition that the second user is an owner of the second window.
(4) The information processing apparatus according to any one of (1) to (3), wherein
   the information to be displayed on the merged window includes a third item group that is created by merging a first item group displayed on the first window and a second item group displayed on the second window.
(5) The information processing apparatus according to (4), wherein
   the information generation unit excludes an item for which the second user does not have access authority in the first item group, from the third item group.
(6) The information processing apparatus according to (4), wherein
   the first item group is associated with a user account of the first user,
   the second item group is associated with a user account of the second user, and
   the third item group is associated with a user account shared by the first user and the second user.
(7) The information processing apparatus according to any one of (1) to (6), wherein
   the window managing unit merges the first window and the second window, when a position relationship between the first window and the second window satisfies a predetermined condition by the operation of the first user and the operation of the second user.
(8) The information processing apparatus according to (7), wherein
   the window managing unit merges the first window and the second window, when a region of a predetermined proportion or more in the first window overlaps with the second window.
(9) The information processing apparatus according to any one of (1) to (8), wherein
   the window managing unit divides the merged window into respective windows corresponding to the first user and the second user, in response to the operation of the first user and the operation of the second user, and
   the information generation unit generates information to be displayed on the divided windows.
(10) The information processing apparatus according to (9), wherein
   the information to be displayed on the divided windows includes a copy of content displayed on the merged window.
(11) The information processing apparatus according to (10), wherein
   the information generation unit does not display the copy on the divided windows, when the content displayed on the merged window is associated with a user account shared by the first user and the second user and is not associated with a user account of each of the first user and the second user.
(12) The information processing apparatus according to any one of (9) to (11), wherein
   the window managing unit sets respective imaginary windows corresponding to the first user and the second user, in the merged window, and divides the merged window when a position relationship between the imaginary windows satisfies a predetermined condition by the operation of the first user and the operation of the second user.
(13) The information processing apparatus according to (12), wherein
   the window managing unit divides the merged window when an overlap region of the imaginary windows become equal to or smaller than a predetermined proportion of each window.
(14) The information processing apparatus according to any one of (1) to (13), wherein
   the second window includes a plurality of windows, and
   the second user includes a plurality of users corresponding to the plurality of windows.
(15) The information processing apparatus according to any one of (1) to (14), further including:
   an input unit configured to accept an input of at least one of the operation of the first user, the operation of the second user, and information for identifying the first user and the second user; or
   a display unit configured to display the first window, the second window, and the merged window.
(16) An information processing apparatus including:
   an information acquiring unit configured to acquire information indicating an operation of a first user to a window displayed on a display unit and an operation of a second user different from the first user to the window;
   a user identifying unit configured to identify each of the first user and the second user;
   a window managing unit configured to divide the window into a first window and a second window different from the first window in response to the operation of the first user and the operation of the second user; and
   an information generation unit configured to generate information to be displayed on each of the first window and the second window.
(17) An information processing method including:
   acquiring information indicating an operation of a first user to a first window displayed on a display unit and an operation of a second user different from the first user to a second window different from the first window displayed on the display unit;
   identifying each of the first user and the second user;
   merging, by a processor, the first window and the second window in response to the operation of the first user and the operation of the second user; and
   generating information to be displayed on the merged window.
(18) An information processing method including:
   acquiring information indicating an operation of a first user to a window displayed on a display unit and an operation of a second user different from the first user to the window;
   identifying each of the first user and the second user;
   dividing, by a processor, the window into a first window and a second window different from the first window in response to the operation of the first user and the operation of the second user; and
   generating information to be displayed on each of the first window and the second window.
(19) A program for causing a computer to implement:
   a function for acquiring information indicating an operation of a first user to a first window displayed on a display unit and an operation of a second user different from the first user to a second window different from the first window displayed on the display unit;
   a function for identifying each of the first user and the second user;
   a function for merging the first window and the second window in response to the operation of the first user and the operation of the second user; and
   a function for generating information to be displayed on the merged window. (20) A program for causing a computer to implement:
      a function for acquiring information indicating an operation of a first user to a window displayed on a display unit and an operation of a second user different from the first user to the window;
      a function for identifying each of the first user and the second user;
      a function for dividing the window into a first window and a second window different from the first window in response to the operation of the first user and the operation of the second user; and
      a function for generating information to be displayed on each of the first window and the second window.

### Reference Signs List

- 100: information processing apparatus
- 110: operation information acquiring unit
- 120: user identifying unit
- 130: window managing unit
- 135: window DB
- 140: information generation unit
- 150: input unit
- 160: display unit

## Claims

1. An information processing apparatus comprising:
an operation information acquiring unit configured to acquire operation information indicating an operation of a first user to a first window and an operation of a second user to a second window;
a window managing unit configured to merge the first window and the second window in response to the operation information; and
an information generation unit configured to generate information to be displayed on the merged window.

2. The information processing apparatus according to claim 1, further comprising:
a user identification information acquiring unit configured to acquire identification information of the first user and the second user,
wherein the window managing unit merges the first window and the second window in response to the operation information, under a condition that the first user is an owner of the first window.

3. The information processing apparatus according to claim 2, wherein
the window managing unit further merges the first window and the second window in response to the operation information, under a condition that the second user is an owner of the second window.

4. The information processing apparatus according to claim 1, wherein
the information to be displayed on the merged window includes a third item group that is created by merging a first item group displayed on the first window and a second item group displayed on the second window.

5. The information processing apparatus according to claim 4, wherein
the information generation unit excludes an item for which the second user does not have access authority in the first item group, from the third item group.

6. The information processing apparatus according to claim 4, wherein
the first item group is associated with a user account of the first user,
the second item group is associated with a user account of the second user, and
the third item group is associated with a user account shared by the first user and the second user.

7. The information processing apparatus according to claim 1, wherein
the window managing unit merges the first window and the second window, when a position relationship between the first window and the second window satisfies a predetermined condition by the operation of the first user and the operation of the second user.

8. The information processing apparatus according to claim 7, wherein
the window managing unit merges the first window and the second window, when a region of a predetermined proportion or more in the first window overlaps with the second window.

9. The information processing apparatus according to claim 1, wherein
the window managing unit divides the merged window into respective windows corresponding to the first user and the second user, in response to the operation information, and
the information generation unit generates information to be displayed on the divided windows.

10. The information processing apparatus according to claim 9, wherein
the information to be displayed on the divided windows includes a copy of content displayed on the merged window.

11. The information processing apparatus according to claim 10, wherein
the information generation unit does not display the copy on the divided windows, when the content displayed on the merged window is associated with a user account shared by the first user and the second user and is not associated with a user account of each of the first user and the second user.

12. The information processing apparatus according to claim 9, wherein
the window managing unit sets respective imaginary windows corresponding to the first user and the second user, in the merged window, and divides the merged window when a position relationship between the imaginary windows satisfies a predetermined condition by the operation of the first user and the operation of the second user.

13. The information processing apparatus according to claim 12, wherein
the window managing unit divides the merged window when an overlap region of the imaginary windows become equal to or smaller than a predetermined proportion of each window.

14. The information processing apparatus according to claim 1, wherein
the second window includes a plurality of windows, and
the second user includes a plurality of users corresponding to the plurality of windows.

15. The information processing apparatus according to claim 1, further comprising:
an input unit configured to accept an input of at least one of the operation of the first user, the operation of the second user, and information for identifying the first user and the second user; or
a display unit configured to display the first window, the second window, and the merged window.

16. An information processing apparatus comprising:
an information acquiring unit configured to acquire operation information indicating an operation of a first user to a window displayed on a display unit and an operation of a second user to the window;
a window managing unit configured to divide the window into a first window and a second window different from the first window in response to the operation information; and
an information generation unit configured to generate information to be displayed on each of the first window and the second window.

17. An information processing method comprising:
acquiring operation information indicating an operation of a first user to a first window and an operation of a second user to a second window;
merging, by a processor, the first window and the second window in response to the operation information; and
generating information to be displayed on the merged window.

18. An information processing method comprising:
acquiring operation information indicating an operation of a first user to a window displayed on a display unit and an operation of a second user to the window;
dividing, by a processor, the window into a first window and a second window different from the first window in response to the operation information; and
generating information to be displayed on each of the first window and the second window.

19. A program for causing a computer to implement:
a function of acquiring operation information indicating an operation of a first user to a first window and an operation of a second user to a second window;
a function of merging the first window and the second window in response to the operation information; and
a function of generating information to be displayed on the merged window.

20. A program for causing a computer to implement:
a function of acquiring operation information indicating an operation of a first user to a window displayed on a display unit and an operation of a second user to the window;
a function of dividing the window into a first window and a second window different from the first window in response to the operation information; and
a function of generating information to be displayed on each of the first window and the second window.
